(19) Europäisches Patentamt
European Patent Office
Office européen des brevets

(11) EP 2 779 417 A2

(12) **EUROPEAN PATENT APPLICATION**

(43) Date of publication:
**17.09.2014 Bulletin 2014/38**

(51) Int Cl.:
*H02P 6/18* (2006.01)    *H02P 25/02* (2006.01)

(21) Application number: **14159137.0**

(22) Date of filing: **12.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.03.2013   US 201361778255 P
07.03.2014   US 201414200663**

(71) Applicants:
• **Semiconductor Components Industries, LLC
Phoenix, AZ 85008 (US)**

• **Universiteit Gent
9000 Gent (BE)**

(72) Inventors:
• **Derammelaere, Stijn
8530 Harelbeke (BE)**
• **Stockman, Kurt
8554 Sint-Denijs (BE)**

(74) Representative: **Clarke, Geoffrey Howard
Avidity IP
Kestrel House
Falconry Court
Baker's Lane
Epping, Essex CM16 5DQ (GB)**

(54) **Control method and device therefor**

(57)    In one embodiment, a method of forming a circuit to control an electrical machine may include, configuring the circuit to obtain voltage and current information of the voltage over and current in one or more stator coils; configuring the circuit to determine a stator current vector and a stator voltage vector; configuring the circuit to determine an amplitude and phase of a fundamental vector of the stator voltage vector and stator current vector; and configuring the circuit to determine a fundamental vector of a back-EMF.

FIG. 1

## Description

Various embodiments relate to the field of controlling electrical and mechanical machines. More specifically, it relates to systems, circuits, and methods for obtaining information related to a rotor position.

This application claims priority to prior filed Provisional Application no. 61/778,255 entitled "SYSTEMS AND METHODS FOR POSITION DETECTION" filed on March 12, 2013, having a docket number of ONS01610, and having common inventors Derammelaere et al. which is hereby incorporated in its entirety herein by reference

In the control of electrical and mechanical machines it often was desirable to know the position of the rotor. Knowledge of this position may, for example in stepper motors, allow understanding in which phase to build up current and to what level in order to obtain an optimal movement; as well as to allow creation of the maximum torque with the lowest amount of current in the stator coils as to optimise the energy efficiency of the drive or the dynamic behaviour. Nevertheless, position detection is of value in many other applications as well, e.g. in cases including endpoints in the movements. For such movements, the position detection can be used e.g. for stall detection. Another application where position detection of movable parts may be valuable would be that of detecting the position of movable parts within vehicles, such as automobiles.

Although a number of physical position sensors were known for determining the position of the rotor in an electrical or mechanical machine, such sensors typically added cost and complexity to the system. Therefore, sensorless control (in the sense that no specific physical position sensor is used) is a more interesting option. There has been some research concerning sensor-less control algorithms, for PMSM (Permanent Magnet Synchronous Machine) and induction machines. Research efforts have also been made to implement sensor-less control algorithms for other types of synchronous electric machines such as for example stepper motors. As a stepper motor is a low-cost machine especially used in low power applications, adaptations to the drive electronics, which would increase the cost, generally were avoided. This indicates a reason why signal injection based methods, as used for PMSM which could exploit the salient character of the rotor in low power electric machines such as the hybrid stepping motor, were not preferred. Moreover, the more accurate observer-based methods required information about the mechanical load, which is difficult to estimate, and upon which application they depend and hence unpractical if a standard component is targeted. Mechanical load parameters can also vary over time. To overcome this problem, observer methods solely based on electrical parameters are developed for PMSM. The structure of these algorithms quickly gets complex and needs optimization by the user. Another drawback of these algorithms is their dynamic behaviour which means that the observer only delivers a correct estimate after a certain settling time. Furthermore, observer methods focus on estimating the rotor position and/or speed neglecting prior information available in the control system. However, typical stepper motor drive methodologies impose a certain speed. Therefore information about the capability of the system to follow this speed setpoint is more valuable.

Overall, sensor-less techniques can basically be divided in three categories. A first category comprises the non-adaptive methods, in which the estimator parameters are kept constant during operation. Secondly, adaptive methods may use a machine model which is corrected with every measurement sample. These methods may result in more accurate estimations but the fact that an accurate machine model is needed makes these methods hard to implement. Thirdly, estimation techniques which inject test signals into the machine may deliver accurate estimation results in a wide speed range. However these last methods are not interesting to implement in low-cost machines as adaptations to the electronic drive circuits are needed which increases costs.

It is an object of the present invention to overcome at least some of the disadvantages of the prior art. Accordingly, it is desirable to have a more accurate, robust, easy to implement and/or reliable and/or lower costs systems, circuits, and/or methods for obtaining a load angle or rotor position related information in electrical machines.

The invention will now be described with the reference to the accompanying drawings in which:

FIG. 1 schematically illustrates an example of an embodiment of a portion of a system in accordance with an embodiment of the present invention;
FIG. 2 illustrates some general principles of a stepping motor principle in accordance with an embodiment of the present invention;
FIG. 3 graphically illustrates an example of an embodiment of a portion of current and flux vectors in the dq-reference frame fixed to the rotor flux of a motor in accordance with an embodiment of the present invention;
FIG. 4 is a graph illustrating an example of an embodiment of a measured torque-load relation for a motor in accordance with an embodiment of the present invention;
FIG. 5 is a graph illustrating examples of an embodiment of a measured load angle for different torque and speed setpoints of a motor in accordance with an embodiment of the present invention;
FIG. 6 is a graph illustrating examples of an embodiment of a linear relation of the load angle and torque relation of a motor in accordance with an embodiment of the present invention;
FIG. 7 schematically illustrates an example of an embodiment of a portion of a control function for a device in accordance with an embodiment of the present invention;

FIG. 8 is a graph illustrating examples of an embodiment of load angle behaviour for a motor in accordance with an embodiment of the present invention;

FIG. 9 is a graph illustrating examples of another embodiment of load angle behaviour for a motor in accordance with an embodiment of the present invention;

FIG. 10 is a graph illustrating examples of an embodiment of load angle dynamics in the form of a pole location plot in accordance with an embodiment of the present invention;

FIG. 11 is a graph illustrating examples of another embodiment of load angle behaviour for a motor in accordance with an embodiment of the present invention;

FIG. 12 is a graph illustrating examples of another embodiment of load angle behaviour for a motor in accordance with an embodiment of the present invention;

FIG. 13 is a graph illustrating an example of an embodiment of the phase induction as a function of the rotor position for a motor in accordance with an embodiment of the present invention;

FIG. 14 is a graph illustrating an example of an embodiment of measured load angle for different speed setpoints for a motor in accordance with an embodiment of the present invention;

FIG. 15 graphically illustrates an example of an embodiment of a portion of a vector representation of the back EMF for a motor in accordance with an embodiment of the present invention;

FIG. 16 is a graph illustrating examples of an embodiment of data samples used to calculate the fundamental voltage as can be obtained in accordance with an embodiment of the present invention;

FIG. 17 schematically illustrates an example of an embodiment of a portion of a sliding discrete Fourier transform implementation in accordance with an embodiment of the present invention;

FIG. 18 schematically illustrates an example of an embodiment of a portion of a modulated sliding discrete Fourier transform implementation in accordance with an embodiment of the present invention;

FIG. 19 is a table illustrating examples of embodiments of different estimated load angles for different operating points in accordance with an embodiment of the present invention;

FIG. 20 is a graph illustrating examples of an embodiment of a comparison between a determined load angle and measurements at a torque disturbance for a low speed operation in accordance with an embodiment of the present invention;

FIG. 21 is a graph illustrating examples of an embodiment of a comparison between a determined load angle estimation and measurements at a torque disturbance for another low speed operation in accordance with an embodiment of the present invention;

FIG. 22 is a table illustrating examples of embodiments of the minimum rotational speed (RPM) to determine the load angle in accordance with an embodiment of the present invention;

FIG. 23 is a graph illustrating examples of an embodiment of a determined load angle at a speed disturbance elapsed in accordance with an embodiment of the present invention;

FIG. 24 is a graph illustrating examples of an embodiment of a determined load angle when a stall occurs in accordance with an embodiment of the present invention;

FIG. 25 is a graph illustrating examples of another embodiment of the estimated load angle when a stall occurs in accordance with an embodiment of the present invention; and

FIG. 26 illustrates an enlarged plan view of a semiconductor device that includes at least a portion of the system of FIG. 1 in accordance with an embodiment of the present invention.

For simplicity and clarity of the illustration(s), elements in the figures are not necessarily to scale, some of the elements may be exaggerated for illustrative purposes, and the same reference numbers in different figures denote the same elements, unless stated otherwise. Additionally, descriptions and details of well-known steps and elements are omitted for simplicity of the description. It will be appreciated by those skilled in the art that the words during, while, and when as used herein relating to circuit operation are not exact terms that mean an action takes place instantly upon an initiating action but that there may be some small but reasonable delay(s), such as various propagation delays, between the reaction that is initiated by the initial action. Additionally, the term while means that a certain action occurs at least within some portion of a duration of the initiating action. The use of the word approximately or substantially means that a value of an element has a parameter that is expected to be close to a stated value or position. However, as is well known in the art there are always minor variances that prevent the values or positions from being exactly as stated. It is well established in the art that variances of up to at least ten per cent (10%) (and up to twenty per cent (20%) for semiconductor doping concentrations) are reasonable variances from the ideal goal of exactly as described. When used in reference to a state of a signal, the term "asserted" means an active state of the signal and the term "negated" means an inactive state of the signal. The actual voltage value or logic state (such as a "1" or a "0") of the signal depends on whether positive or negative logic is used. Thus, asserted can be either a high voltage or a high logic or a low voltage or low logic depending on whether positive or negative logic is used and negated may be either a low voltage or low state or a high voltage or high logic depending on whether positive or negative logic is used. Herein, a positive logic convention is used, but those skilled in the art understand that a negative logic convention could also be used. The terms first, second, third and the like in the claims or/and in the description, as used in a portion of a name of an element are used for distinguishing between similar elements and not necessarily for describing a sequence, either temporally, spatially, in ranking or in any other manner. It is to be understood that the terms so used are interchangeable under appropriate circumstances and that the embodiments described herein are capable of operation in other sequences than described or illustrated herein. Reference to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but in some cases it may. Furthermore, the particular features, structures or characteristics may be combined in any suitable manner, as would be apparent to one of ordinary skill in the art, in one or more embodiments. For clarity of the drawings, doped regions of device structures are illustrated as having generally straight line edges and precise angular corners. However, those skilled in the art understand that due to the diffusion and activation of dopants the edges of doped regions generally may not be straight lines and the corners may not be precise angles.

Any reference signs in the claims shall not be construed as limiting the scope.

In the different drawings, the same reference signs refer to the same or analogous elements.

The descriptions herein will be described with respect to particular embodiments and with reference to certain drawings, but the invention(s) is(are) not limited thereto. The drawings described are only schematic and are non-limiting. In the drawings, the size of some of the elements may be exaggerated and are not necessarily drawn to scale for illustrative purposes.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

According to some embodiments presented herein, circuits, methods, and/or systems are provided for obtaining information regarding a rotor position relative to the stator in an electrical machine, such as for example a stepper motor or brushless DC-motor or PMSM.

According to some embodiments, the load angle can be determined at a point or points along the sinusoid based on the stimulus current and voltage of the coil(s), for example a circuit may be configured to determine the load angle based in signals that are representative of stimulus current and voltage.

According to some embodiments, the load angle can be determined for a large range of rotational speeds imposed by the electrical machine, such as for example stepping motor driver.

According to some embodiments, the position can be obtained based on the natural control signals and/or easily observable electrical signals from the electrical machine (for example, voltage and current).

According to some embodiments, the method is independent from the motor load. In one embodiment, the method only depends on the inductance (L) and resistance (R) of the coils and these parameters can be calibrated off-line as well as on-line. This as opposed to more complex observer algorithms designed to estimate the rotor position and speed which do often need information about the mechanical load. Nevertheless, various embodiments also allow to provide the required information for accurately driving the motor.

According to some embodiments, for estimating the inductance (L) and the resistance (R), known estimation techniques can be used.

According to some embodiments, since the method is only dependent on L and R, a fast and easy calibration of the system is possible.

According to some embodiments, the method can cope with high inductance levels even at high speed whereas prior techniques require a zero current and zero derivative of the current to estimate the back-EMF (Electromagnetic field). Having high inductance levels at high speed may not lead to a zero derivative of the current and therefore makes it more difficult to have a good estimation of the back-EMF.

According to some embodiments, the method has a high dynamic behavior as it is not necessary to wait on a zero crossing of the current before obtaining the voltage. It thus is an advantage of various embodiments that a high dynamic behavior can be followed and accurately estimated.

According to some embodiments, the computational cost are low. In one embodiment, for the estimation of three vectors only one real sum, one complex sum, and one complex multiplication may be required.

According to some embodiments, the method relies on several samples realizing an inherent filtering towards noise.

According to some embodiments, the position of the rotor can be obtained in a sensor-less way, this means without the presence of a vulnerable physical sensor (e.g. a hall sensor or a light sensitive sensor).

According to some embodiments, knowing the rotor position in an electrical machine allows the determination of a more correct or more optimal current commutation, both in terms of timing and amplitude, for example a circuit may be configured to determine the rotor position.

According to some embodiments, knowing the rotor position in an electrical machine allows creation of increased torque with a lower amount of current in the stator coils as to increase the energy efficiency of the drive or provide a more dynamic behavior, for example a circuit may be configured to determine the rotor position and provide signals to drive the electrical machine. It is an advantage of various embodiments that the stator current can be controlled towards more optimal energy efficiency.

According to some embodiments, knowing the position of the rotor also can be used for immediate stall detection (For example, in the case there are end-points to the movements).

According to some embodiments, the load angle could serve as feedback information to implement more intelligent stepping motor drive algorithms since the load angle between the stator current vector and the rotor reflects the capability of the stepping motor system to follow the imposed speed setpoint and eventually overcome a load torque increase.

According to some embodiments, by measuring voltage and current at the coils of a machine, for example a motor, and using these as input for the control loop, the complete system will become more robust to variations in the steering electronics.

These and other aspects of various embodiments will become more apparent from and described with reference to the embodiment(s) described hereinafter.

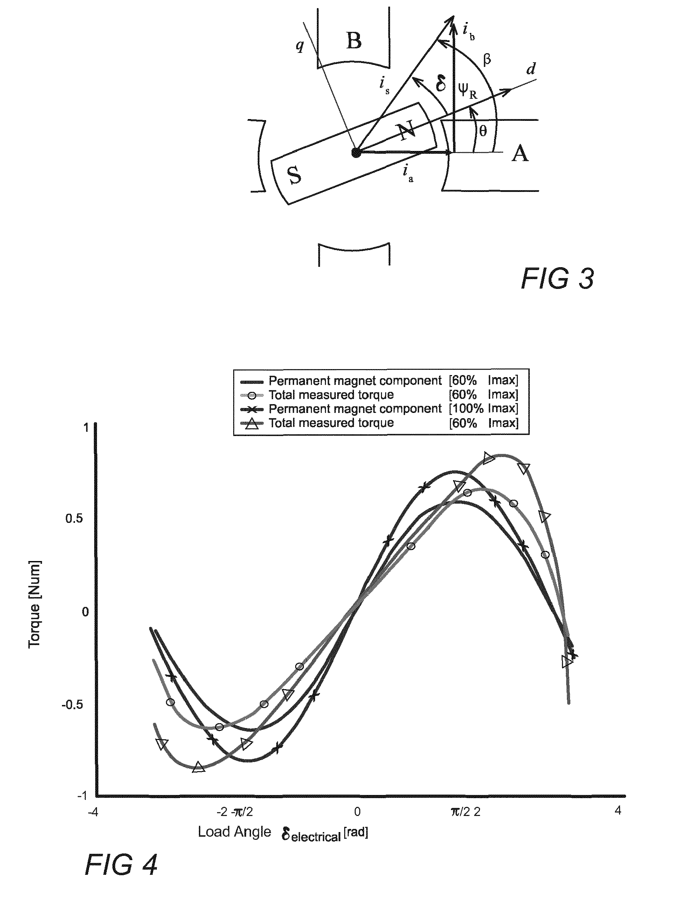

As referenced herein, where in embodiments reference is made to the load angle ($\delta$), reference is made to the lag between the actual rotor flux position and the current excitation vector, ($\delta$ in FIG.3).

Where in embodiments reference is made to the currents $i_a$ and $i_b$ (see FIG. 3), reference is made to the phase currents through the stator coils (A) and (B).

Where in various embodiments reference is made to time domain stator current space vector $i_s$, reference is made to a current vector composed of the phase currents $i_a$ and $i_b$ (see FIG. 3).

Where in embodiments reference is made to frequency domain stator current space vector $I_s$, reference is made to a current vector composed of the phase currents $i_a$ and $i_b$.

Where in embodiments reference is made to the speed setpoint, reference is made to the time derivative of the angular position of the current vector. The angular position of the current vector is given by $\beta$ in FIG. 3.

Where in embodiments reference is made to permanent magnet rotor flux $\Psi_R$, reference is made to a vector indicating size and direction of the flux of the permanent magnets of the rotor (see FIG. 3).

Where in embodiments reference is made to stator flux-linkage space vector $\Psi_S$, reference is made to a vector composed of the stator flux linkages, established by the two stator currents and the permanent magnet rotor flux $\Psi_R$.

Where in embodiments reference is made to the dq-reference frame, reference is made to a reference frame where the d-axis is along the axis of the permanent magnet rotor flux $\Psi_R$ (the direct direction) and where the q-axis is orthogonal to it (the quadrature direction). An example of the dq-reference frame is illustrated in FIG. 3.

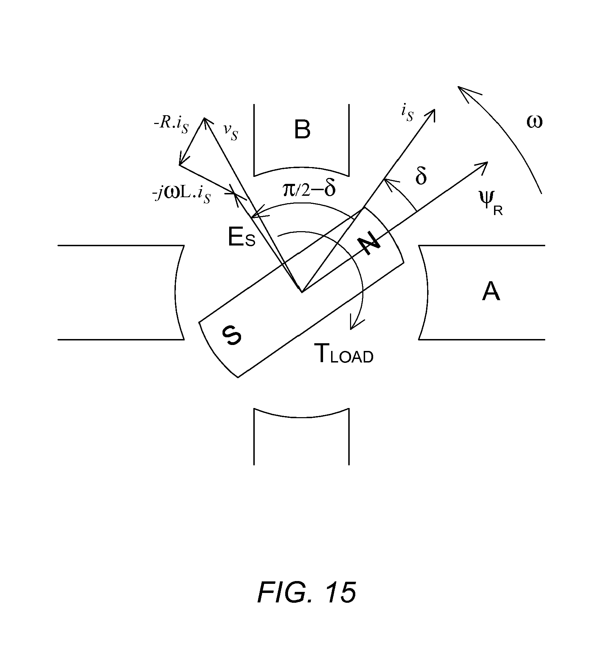

Where in various embodiments reference is made to vector $E_S$, reference is made to the time domain back emf space vector (see FIG. 15).

Where in various embodiments reference is made to vector $U_S$, reference is made to the time domain voltage over the coils space vector (see FIG. 15).

Where in embodiments reference is made to the fundamental component of a signal, reference is made to the component which varies at the fundamental frequency, that means the first harmonic of the electrical signal.

Where in embodiments reference is made to the reluctance effect, reference is made to a motor torque induced by a difference in stator inductance in the direct direction and the stator inductance in the quadrature direction.

Where in embodiments reference is made to $\beta$, reference is made to the angular position of the current vector.

Where in embodiments reference is made to $\theta$, reference is made to the angular position of the rotor flux vector $\Psi_R$.

Where in embodiments reference is made to the load, reference is made to the load of the motor which is modelled by an inertia J, a friction component b and a load torque $T_L$

Where in embodiments reference is made to the torque constant, reference is made to the linearized relationship between load angle and motor torque for a given stator current whereby the conversion factor $\Gamma_C$ the torque constant is. The relationship is as in the following:

$$T_M(\delta) = \Gamma_C \cdot \delta.$$

Where in embodiments reference is made to direct axis inductance, reference is made to the stator inductance in the direct direction $L_d$.

Where in embodiments reference is made to quadrature axis inductance, reference is made to the stator inductance in the quadrature direction $L_q$.

Where in embodiments reference is made to rotor saliency, reference is made to the difference in inductance between $L_d$ and $L_q$.

Where in embodiments of reference is made to phase induction, reference is made to the self-induction of the stator coil.

Where in embodiments of reference is made to $\theta_e$, reference is made to angular position of the rotor, converted to a machine with one pole pair.

Where in embodiments reference is made to $L_{mean}$ reference is made to mean value of the inductances $L_a$ and $L_b$ over a full mechanical rotation.

Where in embodiments reference is made to $\Delta L$ reference is made to the amplitude of the variation of the inductances $L_a$ and $L_b$ over a full mechanical rotation.

In a first aspect, various embodiments relate to a system and/or circuit(s) for gathering information regarding the load angle based on the obtained voltage and current through the coils of an electrical machine. Information regarding the load angle may be an estimate of the load angle itself, a determination of the load angle itself(such as for example a determination made by a circuit), may be a rotor position, and/or may be the rotor load.

The system and/or circuit(s) according to various embodiments can be used for or implemented in synchronous electrical and mechanical machines. Such machines comprise but are not limited to electrical motors such as but not limited to a stepper motor, a brushless DC (direct current) motor or a permanent magnet synchronous motor, and motors and rotors used within vehicles, etc. When for example stepper motors are considered, such stepper motors can be two phase hybrid stepper motors, both stator and rotor can be multi-toothed, etc.

According to various embodiments, the system and/or circuit(s) for gathering information about the load angle comprises a data obtainment means for obtaining voltage and current information of the voltage and current in the coils of the machine or may comprise a data obtainment circuit for obtaining voltage and current information of the voltage and current in the coils of the machine. An embodiment may comprise a processing unit for determining, based on the obtained voltage and current information, an amplitude and phase of the voltage and current fundamental vector based upon the voltage and current info from the data obtainment means. In an embodiment, the processing unit may be programmed for deriving, based on the voltage and current fundamental vector, a fundamental vector of the back-EMF, and for determining information about the load angle based on the phase of the back EMF fundamental vector ($E_S$) and the current fundamental vector ($I_S$). An embodiment may include that the processing unit may be configured for deriving, based on the voltage and current fundamental vector, a fundamental vector of the back-EMF, and for determining information about the load angle based on the phase of the back EMF fundamental vector ($E_S$) and the current fundamental vector ($I_S$).

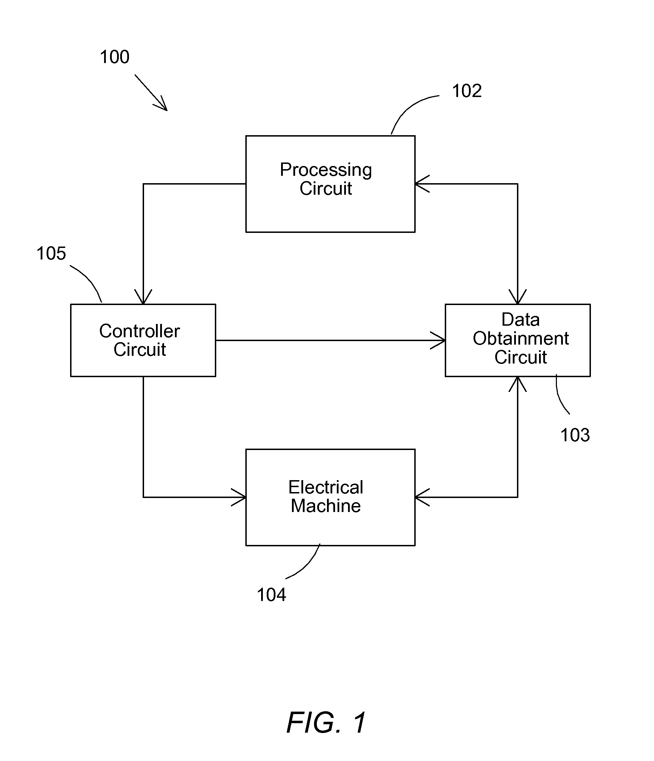

By way of illustration and reference to FIG. 1, an example of an embodiment of a portion of a system for gathering information 100 is illustrated. In an embodiment, system 100 may include an information gathering circuit or information circuit 107, illustrated in a general manner by a dashed box, comprising a data obtainment circuit 103 for obtaining information regarding the voltage over and the current through coils of an electrical machine. The data obtainment circuit 103 may be a circuit that is configured to receive information regarding the voltage and the current or may be a circuit for determining such information. In other embodiments, circuit 107 may be a means for gathering information and circuit 103 may be a means for receiving the information regarding the voltage and the current or may be a means for determining such information. Circuits for determining such information may be based on sensors, whereas circuits for receiving such information may be for example an input port. In one particular embodiment, the data obtainment circuit 103 may also provide a direct interface between a driving unit of the machine 104, for example a steering unit, and the data obtainment circuit 103 to pass current information, such as for example current values, to the data obtainment circuit 103. For example, circuit 107 may be configured to control machine 104 responsively to the determined voltage and current. The data obtainment circuit 103 may thus, for example, be adapted for receiving information of the current used, and may be adapted for capturing information regarding the voltage over the coils by sampling the voltage. A sampling circuit for sampling information regarding the voltage may for example may comprise an A/D (analog-to-digital) convertor. In a particular example, a circuit for sampling the voltage may for example comprise an A/D convertor connected to a current sensor. The sample speed depends on the rotational speed but typically may vary between 1kHz and 10MHz for example for a rotation speed varying between 10rpm and 10,000rpm (for example 1000 rpm, i.e. rotations/minute) and the number of samples per period varying between 4 and 64 (for example 10 samples/period) and the number of pole pairs varying between 2 and 100 (for example 50 pole pairs). The dynamic range of the A/D convertor may vary between 8 and 16 bits (for example 12 bits). The effective dynamic range may depend, amongst other things, on the sample clock jitter and therefore might be smaller than the dynamic range of the A/D convertor. In another particular example, the data obtainment circuit may for example comprise a multiplexing A/D convertor for obtaining the voltage and current samples.

The system 100 according to various embodiments may in some embodiments include a circuit that may include a processing circuit 102, also referred to as processor, connected with the data obtainment circuit 103 for obtaining the information regarding the voltage and current, for example, for obtaining samples of the voltage and current values. The processing circuit processes the current and voltage samples for estimating the load angle. The processing circuit might be implemented using a field programmable gate array (FPGA), or a digital signal processor, or a microcontroller or a combination of those, embodiments not being limited thereto. A simple, non-complex load angle estimation algorithm according to various embodiments results advantageously in processors that can be lower in cost. For example, to reduce the cost it is important to have a gate count as low as possible when implementing an algorithm on the processor, for example FPGA, as it reduces the FPGA cost.

The load angle ($\delta$) describes the lag between the actual rotor flux position and the current excitation vector, for example the stator current vector. Since the load angle describes the lag between the actual rotor flux position and the current excitation vector, the load angle value reflects the capability of the system to follow the speed setpoint and eventually overcome a load torque increase. For this reason, the estimation of the load angle is especially advantageous and interesting when it comes to an intelligent hybrid stepping motor control algorithm.

The processing circuit according to various embodiments is configured or adapted for deriving from the voltage and current information an amplitude and phase of the voltage and current fundamental vector, for deriving based on the voltage and the current fundamental vector, a fundamental vector of the back-EMF, and for determining information about the load angle based on the phase of the back EMF fundamental vector and the current fundamental vector. The processor may therefore be programmed according to a predetermined algorithm. As described above the processor may be implemented as a specific or general purpose processor. According to some various embodiments, the processing circuit may be implemented in software or in hardware.

According to some embodiments, the processing circuit 102 may be programmed for deriving the fundamental vector of the back-EMF based on the relation

$$E_S \ = \ U_S - j * \omega * L * I_S - R * I_S$$

where $E_S$ represents the fundamental vector of the back-emf (i.e. the phasor of the fundamental component), $U_S$ represents the fundamental vector of the voltage over the stator coil (i.e. the phasor of the fundamental component), $I_S$ represents the fundamental vector of the current through the stator coil (i.e. the phasor of the fundamental component), $L_s$ represents the inductance of the stator coils and $R_s$ represents the resistance of the stator coil. The above relationship hence relates to the relationship between the phasors of the fundamental components of the back-emf, voltage over and current through the coils. Whereby furthermore $\omega$ corresponds to the 2nf, f being the fundamental frequency (first harmonic) of these electrical signals resulting from the known rotational speed of the electrical machine. In stepper motors this rotational speed is dictated by the control loop that is placed around the electrical machine, or it can be derived from known speed observation and determination techniques.

Preferably the sampling period is less than 1/10 times the signal period for stepper motors is determined by,

$$T_{signal} \ = \ 60 / (n * P)$$

Wherein n equals the rotational speed (in rpm, rotations per minute) of the electrical machine and P equals the number of pole pairs.

The voltage and current thereby are based on the information of the voltage and current information obtained with the data obtainment circuit 103. The processing unit may base calculations for obtaining the amplitude and phase of, for example, the fundamental current vector and the fundamental voltage vector, for example the phasors of the fundamental vectors, based on the following equation for N samples, whereby N equals the integer ratio (i.e. after appropriate rounding) between $T_{signal}$ (i.e. 1/f, hence $T_{signal}$ is the period of the fundamental) and $T_s$, ($T_s$ is the sampling period, i.e. the inverse of the sampling frequency $f_s$ at which the data obtainment means samples the current through and the voltage over the coils) it is hence the number of samples per signal period.

$$X_K = \sum_{n=0}^{N-1} x(n) * e^{-j*K*\left(\frac{2\pi}{N}\right)*n} \quad (K=1)$$

Calculation of the voltage and current fundamental vector can in one embodiment be performed using a Sliding Discrete Fourier Transform and in another embodiment be performed based on a Modulated Sliding Discrete Fourier Transform.

If this technique is applied to the samples of the voltage over and current through to coil, the fundamental vector of the back emf vector ($E_S$) can be calculated from the fundamental vector of the voltage ($U_S$) and fundamental vector of the current ($I_S$) with

$$E_S \ = \ U_S - (j \star \omega \star L) \star I_S - R \star I_S$$

The load angle ($\delta$) can then hence be determined as:

$$\delta = \frac{\pi}{2} - (angle(E_S) - angle(I_S))$$

For example, the load angle can be calculated at a point or points along the sinusoid.

According to various embodiments, the system or a circuit may be adapted to or configured for determining the amplitude and phase of the fundamental of the current in the stator coils and the fundamental of the voltage over the stator coils in the analogue continuous time domain. In an embodiment, circuit 100 may be configured to use a mixer for mixing the current and voltage signals with a sin and cos signal with a frequency equal to the fundamental frequency and low pass filtering this obtained a mixing signal.

According to various embodiments, the system and/or circuit also may be provided with an output means for outputting a load angle derived from the back EMF vector.

By way of illustration, various embodiments not being limited thereto, the processing circuit 102 can be interfaced with a controller circuit or controller 105 of the electrical machine 104, for example with a motor steering unit, thus being adapted for passing the load angle information, for example rotor position information, to the controller for controlling the electrical machine. The controller and the system and/or circuit for gathering information thus may form a closed control loop. The controller typically will be adapted for driving the electrical machine. For the example of a stepper motor, the controller may be configured to drive the machine in response to performing the full-, half- and micro-stepping drive algorithms. It is to be noticed that in various embodiments, signal injection is not required for load angle estimation.

As described above, the system and/or circuit for gathering information can co-operate with an electrical machine for obtaining information or assisting in driving such an electrical machine. Nevertheless, various embodiments relate in one aspect also to an electric machine comprising a system for gathering information as described above. Such an electric machine then typically comprises a controller for controlling the driving of the electric machine 104 and being adapting the controlling of the driving as function of load angle information obtained from the system for gathering information.

Without wishing to be bound by theory, the following principles could be used for explaining or illustrating the advantages of methods, circuits, and/or systems according to various embodiments.

Considering a motor as an electrical machine, it is interesting to consider the generated motor torque as a function of the load angle. It is quite common to express the torque as the interaction of the stator flux-linkage space vector $\Psi_S$ and the stator current space vector $i_s$.

$$T_M \ = \ \Psi_S \star i_S$$

The stator flux-linkage space vector $\Psi_S$ is composed of the stator flux linkages, established by the two stator currents and the permanent magnet rotor flux $\Psi_R$. In the dq-reference frame fixed to the rotor flux, illustrated in FIG. 3, this can be written as:

$$T_M \;=\; (\Psi_R + i_d * L_d + i_q * L_q) * i_S$$

The electromagnetic torque can then be written as:

$$T_M = \Psi_R * i_S * \sin\delta + \frac{L_d - L_q}{2} * i_S^2 * \sin(2\delta)$$

The first term in the previous equation describes the torque generated by the interaction between the permanent magnet rotor flux $\Psi_R$ and the stator current $i_S$. This term varies sinusoidal with the load angle $\delta$ between $i_s$ and the rotor flux $\Psi_R$. Thanks to the multi-toothed rotor and stator of a hybrid stepping motor, the reluctance effect will affect the generated torque. This reluctance effect is represented by the second term in the previous equation and varies sinusoidal with twice the load angle $\delta$.

By way of illustration, various embodiments not being limited thereby, to quantify both effects, the torque delivered by the motor is measured while the rotor is blocked. The load angle $\delta$ between the stator current vector $i_s$ and the permanent magnet rotor flux $\Psi_R$ is modified by changing the currents $i_a$ and $i_b$.

FIG. 4 is a graph illustrating an example of a measured torque-load relation for 60% and 100% of the nominal current $I_{max}$ of a motor according to some embodiments. For a current amplitude of 60% and 100 % of the nominal current, these measurements are illustrated in general in FIG. 4. The torque component, generated by the interaction between the permanent magnet rotor flux and the stator current is dominant.

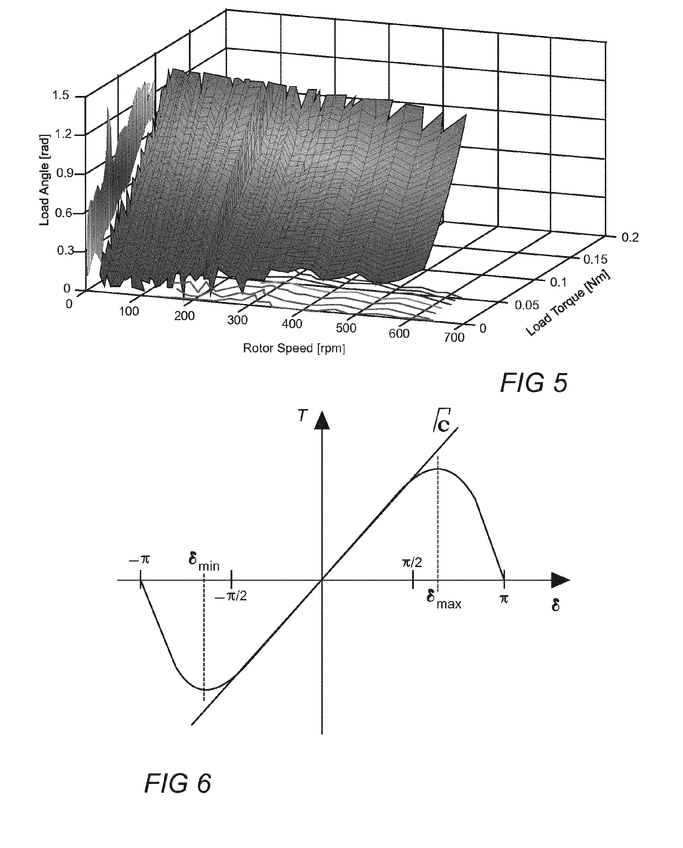

From these mathematical considerations it can be concluded that the torque generation is determined by the load angle $\delta$ between $i_s$ and the rotor flux $\Psi_R$. For a fixed current vector $i_s$ the load angle increases with an increased load torque, which will be shown with reference to the example illustrated in FIG. 5, illustrating the behaviour of this load angle $\delta$ for various operating points. FIG. 5 illustrates these results for a half step operation mode for a stepper motor. It is clear that the load angle increases when the load torque increases.

In an embodiment, a linear model may be used to describe the dynamic behaviour of the load angle. By way of an example illustration, various embodiments not being limited thereto, features and advantages of at least some various embodiments can be understood from following mathematical considerations. It is to be understood that neither the mathematical formalism used, nor any approximation used or contribution not taken into account may be considered limiting for various embodiments. As the estimation algorithm needs measurement samples from the past it is important to have a good understanding on the load angle dynamics. When the dynamic load angle behaviour is known, the dynamic behaviour of the estimator can be evaluated.

To model its behaviour, the load angle is considered as the difference between the angular position $\beta$ of the current vector $i_s$ and the angular position $\theta$ of the rotor flux vector $\Psi_R$ (FIG. 3).

When the load is modelled by an inertia J, a friction component b and a position independent load torque $T_L$, the equation of motion is given by:

$$T_M(\delta) = J\ddot{\theta} + b\dot{\theta} + T_{load}$$

In some embodiments, the relation between the load angle $\delta$ and the generated torque $T_M$ can be non-linear as illustrated in FIG. 4. However, when the load angle gets larger than $\delta_{max} \approx \pi/2$ or smaller than $\delta_{max} \approx -\pi/2$ the electro-mechanical torque will decrease resulting in a possible loss of synchronism. To avoid step loss, the load angle value can be between $\delta_{min}$ and $\delta_{max}$. Thanks to the reluctance effect, the error made by linearizing the torque-load angle ($\delta$) relation in this range is small, as illustrated in FIG. 6.

The electromechanical torque-load angle ($\delta$) relation for a given current amplitude $i_s$ can be written as:

$$T_M(\delta) \;=\; \Gamma_C * \delta$$

Combining the load model formula with the formula above leads to the following relationship:

$$\Gamma_C * (\beta - \theta) = J\ddot{\theta} + b\dot{\theta} + T_{load}$$

$$\delta = \beta - \theta$$

The speed setpoint is considered as the time derivative of the angular position of the current vector. The influence of the load torque $T_L$ and the speed setpoint $\dot{\beta}$ on the load $\delta$ angle is considered.

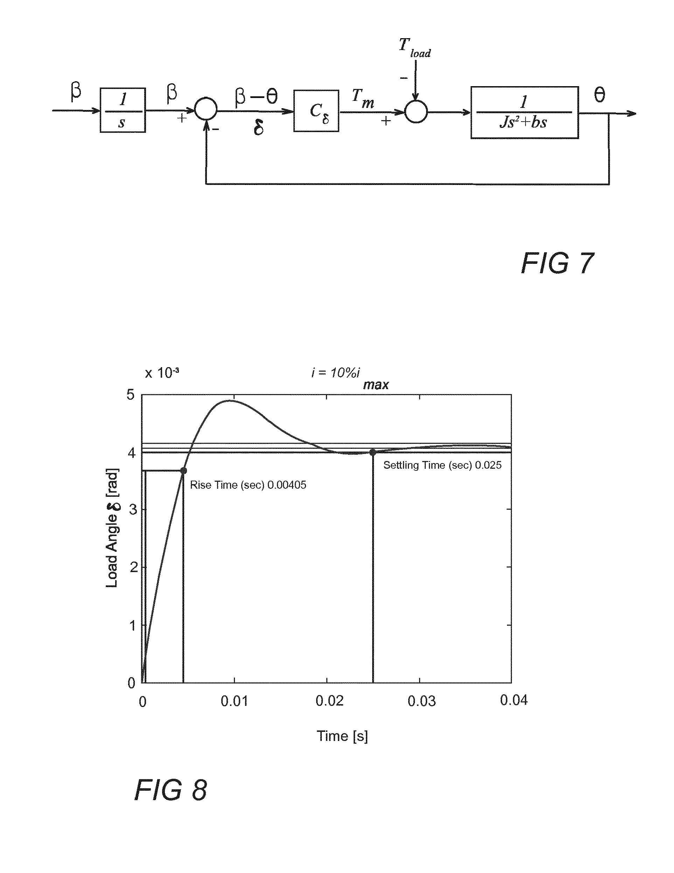

FIG. 7 schematically illustrates an example of an embodiment of a portion of a control function for a device, illustrated in the s-domain. In an embodiment, the control function includes an embodiment of an algorithm describing the influence of the speed setpoint $\dot{\beta}$ and load torque $T_L$ on the load angle $\delta$ for a motor. The load angle $\delta$ dynamics can easily be written as:

$$\delta = \dot{\beta} * \frac{J_S + b}{J_S^2 + bs + \Gamma_C} + T_{Load} * \frac{1}{J_S^2 + bs + \Gamma_C}$$

When the impact of a speed disturbance $\dot{\beta}$ on the load angle $\delta$ dynamics is studied, $T_{Load}$ can be neglected. The load angle dynamics are then described by:

$$\delta = \dot{\beta} * \frac{J_S + b}{J_S^2 + bs + \Gamma_C}$$

According to this relationship, to generate the necessary torque to accelerate the rotor during the transient load angle behaviour, the load angle $\delta$ will raise when $\dot{\beta}$ increases. Due to the increased rotor speed $\dot{\theta}$, the required torque to overcome the higher friction torque will increase. The latter results in a higher load angle after the transient behaviour.

FIG. 8 is a graph illustrating examples of an embodiment of load angle ($\delta$) behaviour after a speed setpoint of one (1) rpm such as for example, an embodiment in which the current through the coils may be 10% of the maximum current for a motor.

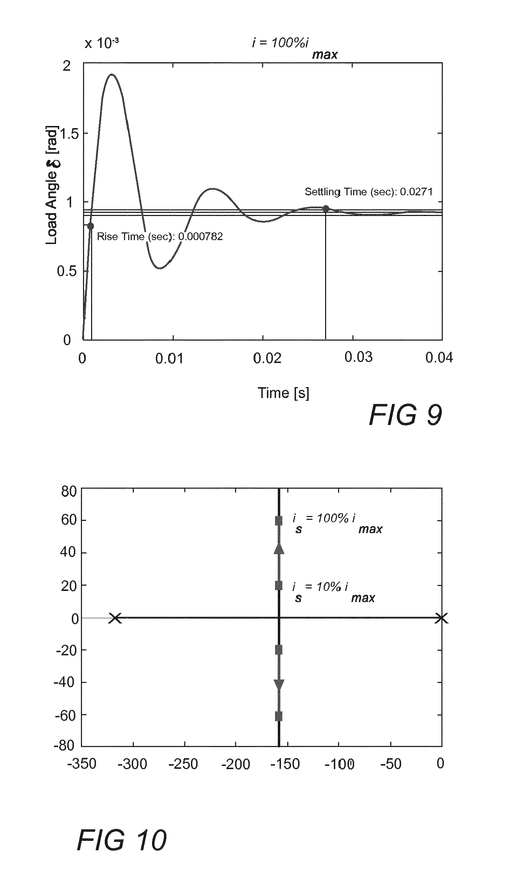

FIG. 9 is a graph illustrating examples of an embodiment of load angle ($\delta$) behaviour after a speed setpoint of one (1) rpm where the current through the coils may be 100% of the maximum current for a motor. When the parameters for the particular stepping motor application are known, the dynamic load angle $\delta$ response can be plotted as in FIG. 8 and FIG. 9.

This dynamic load angle behaviour is a function of the torque constant $\Gamma_C$ which increases together with the current amplitude $i_s$. Therefore it is interesting to consider the position of the poles in the equation above, as a function of the current amplitude $i_s$.

FIG. 10 is a graph illustrating examples of an embodiment of load angle dynamics in the form of a pole location plot where the pole location is plotted as a function of the current level $i_s$. The values of $\Gamma_C$ are based on measurements. $\Gamma_C$ = 0.098 for is = 10%$i_{max}$ and $\Gamma_C$ = 0.430 for $i_s$ = 100%$i_{max}$

The measurements are done on a motor as can be used in embodiments according to the present invention. From the root locus in FIG. 10 it follows that a higher current level will have little impact on the settling time of the load angle. However, as the current increases, the ringing will become more severe and the rise time will seriously decrease as in FIG.9.

When the impact of a load torque $T_{Load}$ disturbance on the load angle $\delta$ dynamics is studied, $\dot{\beta}$ can be neglected. The load angle dynamics are described by:

$$\delta = T_{Load} * \frac{1}{J_S^2 + \mathrm{bs} + \Gamma_C}$$

When the load torque $T_{Load}$ increases, the torque available to overcome the friction will drop. Therefore the speed of rotor $\dot{\theta}$ will slightly decrease. This transient behaviour results in an increased load angle $\delta$. Thanks to this higher load angle $\delta$, the electromechanical torque increases as well until an equilibrium is reached.

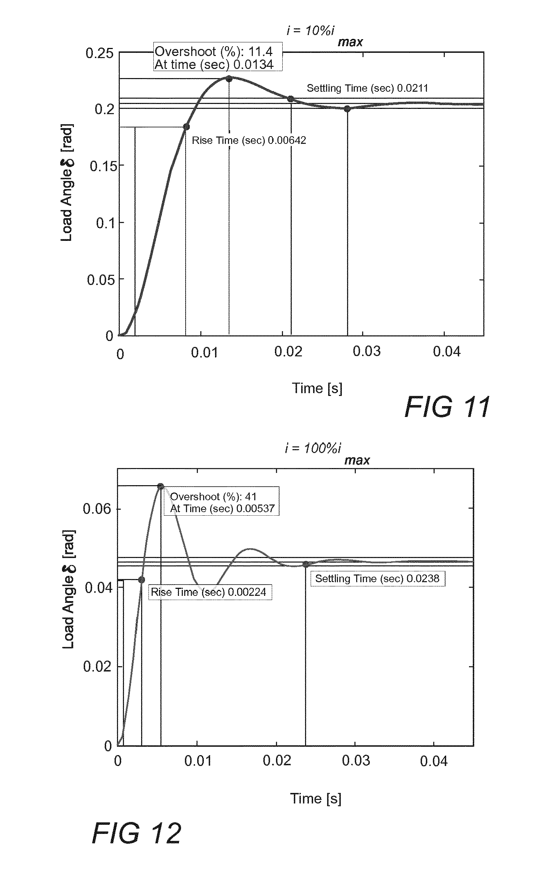

FIG. 11 is a graph illustrating examples of another embodiment of load angle ($\delta$) behaviour for a motor for an embodiment including a load torque setup where the current through the coils is 10% of the maximum current for a motor.

FIG. 12 is a graph illustrating examples of another embodiment of load angle ($\delta$) behaviour for a motor for an embodiment including a load torque setup where the current through the coils is 100% of the maximum current. When the parameters for the particular stepping motor application are known, the dynamic load angle $\delta$ responses can be plotted as in FIG. 11 and FIG. 12.

As the denominator of the equation above is the same as the denominator in the equation describing the dynamic behaviour under influence of a speed disturbance, the location of the poles will be the same for the load angle $\delta$ dynamics after a speed- or torque setpoint step. Therefore, the conclusions based on the root-locus of FIG. 10 holds for both a speed- and torque disturbance. The rise- and settling time after a speed- or load torque disturbance will be used to evaluate the dynamic behaviour of the estimation algorithm according to various embodiments.

In particular embodiments, the electrical machine may be a motor 104 with a multi-toothed rotor and stator having a different dynamic behaviour of the load angle variation and for which the dynamic behaviour is elaborated mathematically in the following paragraphs. When only the rotor saliency in FIG. 3 is considered, the difference between the direct axis inductance $L_d$ and the quadrature axis inductance $L_q$ is constant.

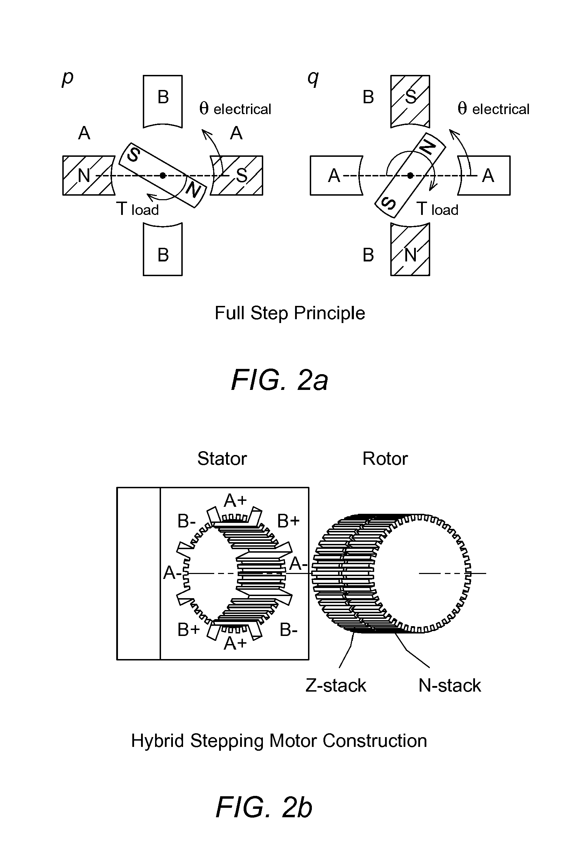

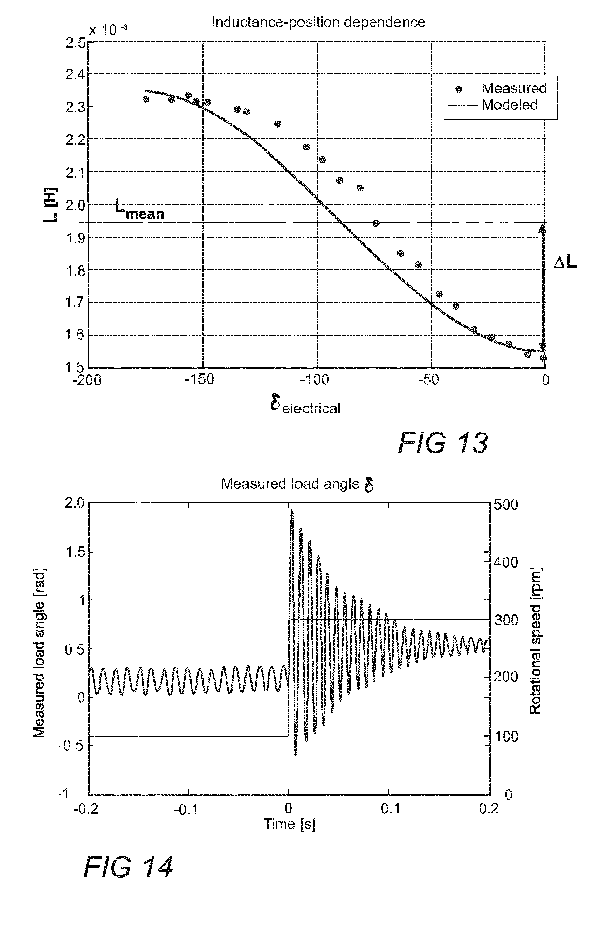

FIG. 2 illustrates an example of some general principles of a stepping motor principle such as for example the full step principle as well as a construction example of a hybrid stepping motor. However, for common hybrid stepping motors illustrated in FIG. 2, both the stator and rotor is multi-toothed. In an embodiment, this may result in a phase inductance $L_a$ and $L_b$ as illustrated in FIG. 13. Those skilled in the art will appreciate that in an embodiment the illustrated N-stack and the Z-stack may include a plurality of stacked elements.

FIG. 13 is a graph illustrating an example of an embodiment of the phase induction as a function of the rotor position.

This inductance position dependency can be modelled as:

$$L_a = -\Delta L * \cos(\theta_e) + L_{mean}$$

$$L_b = -\Delta L * \cos\left(\theta_e + \frac{\pi}{2}\right) + L_{mean}$$

When the inductances are transformed to the dq reference frame, the difference $L_d$-$L_q$ can be written as:

$$L_d - L_q = -\Delta L + 2 * L_{mean} * \sin(\theta_e)$$

The electromagnetic torque:

$$T_M = \Psi_R * i_S * \sin\delta + \frac{L_d - L_q}{2} * i_S^2 * \sin(2\delta)$$

can therefore be written as:

$$T_M = \Psi_R * i_S * \sin\delta + \frac{-\Delta L + 2 * L_{mean} * \sin(\theta_e)}{2} * i_S^2 * \sin(2\delta)$$

If the motor load and speed is constant, the load angle $\delta$ varies to compensate the position dependency of the torque generation indicated in the second term of the equation above. By way of illustration, an example of an embodiment of this vibrating load angle $\delta$ behaviour is illustrated in the measurements in FIG. 14.

FIG. 14 is a graph illustrating an example of an embodiment of measured load angle for different speed setpoints for a motor. In an embodiment, the excitation vector $i_s$ rotates at constant speed which accords to a fine micro stepping drive algorithm.

In a further embodiment, various embodiments relate to a method to estimate the load angle solely based on electrical motor parameters and electric measurements (current and voltage). The method may advantageously be performed using a system as described in the first embodiment although various embodiments are not limited thereto. In an embodiment, the method may comprise obtaining voltage and current information of the voltage and current in the coils of the machine, determining, based on the obtained voltage and current information, an amplitude and phase of the voltage and current fundamental vector, such as for example based upon the voltage and current info from the data obtainment circuit, deriving, based on the voltage and current fundamental vector, a fundamental vector of the back-EMF, and determining information about the load angle based on the phase of the back EMF fundamental vector and the current fundamental vector. For example, the method may include configuring a circuit, such as for example circuit(s) 103 and/or 105 determine a load angle value. An embodiment of the method may include configuring the circuit to receive signals that are representative of voltage of the coils of the machine and representative of current in the coils of the machine, and to responsively form a value that is representative of a fundamental vector of the back-EMF of the machine. The method may include, in an embodiment, forming a load angle value at discrete points along the sinusoid from the current vector and the voltage vector.

Method embodiments may provide load angle estimation algorithms.

By way of illustration, various embodiments not being limited thereby, standard and optional features as well as theoretical considerations that may be used for explaining the steps in the method will be discussed now in more detail.

In an embodiment, the algorithm may include three steps, first the signal is taken, next the fundamental component of the signal is determined. Based on the amplitudes and phases (angles) of the fundamental vectors it is possible to determine the load angle.

In an embodiment, obtaining input according to various embodiments implies that both the motor current as well as the motor voltage can be required inputs for the load angle estimation algorithm. Obtaining the voltage over and the current in the coils of the machine may be required to determine the angle between the current vector and the back EMF voltage vector $\alpha$. The voltage over and current through the coils may be obtained by sampling them. For most synchronous electrical machines, such as for example a stepper machine with micro-stepping, it may be sufficient to sample the current and voltage in one phase. An embodiment may include sampling at discrete point(s) along a sinusoid based on the fundamental current vector and the fundamental voltage vector and forming a value for the load angle based therefrom.

An embodiment of the method may comprise performing this calculation in the Fourier domain on the first harmonic, for which hence the first harmonic of the voltage and current vector need to be determined. This first harmonic can be reconstructed by sampling the voltage over and the currents in one or more of the coils of the stepper motor.

When the phase current signals $i_a$ and $i_b$ are substantially pure sine wave signals, with a phase shift of approximately 90 degrees between them, the amplitude of vector $i_s$ may be substantially constant. For this condition, given the torque substantially only depends on the load angle and difference between $L_d$ and $L_q$ according to the following equation:

$$T_M = \Psi_R * i_S * \sin\delta + \frac{L_d - L_q}{2} * i_S^2 * \sin(2\delta)$$

However, when the current signals $i_a$ and $i_b$ contain higher harmonic components, the amplitude of the current vector $i_s$ may also contain harmonic components. This varying current amplitude results in a torque ripple. Nevertheless, these harmonic components will not substantially influence the average torque as their average over time is approximately zero. Therefore, it is reasonable to neglect higher harmonic current components as they do not substantially contribute to the average torque production. A Fourier transformation can be used to calculate the amplitude and phase of the fundamental vector of the stator currents and voltages. For a signal X with a period of N samples, the Kth harmonic component can be written as:

$$X_K = \sum_{n=0}^{N-1} x(n) * e^{-j*K*\left(\frac{2\pi}{N}\right)*n} \quad \text{(K=1)}$$

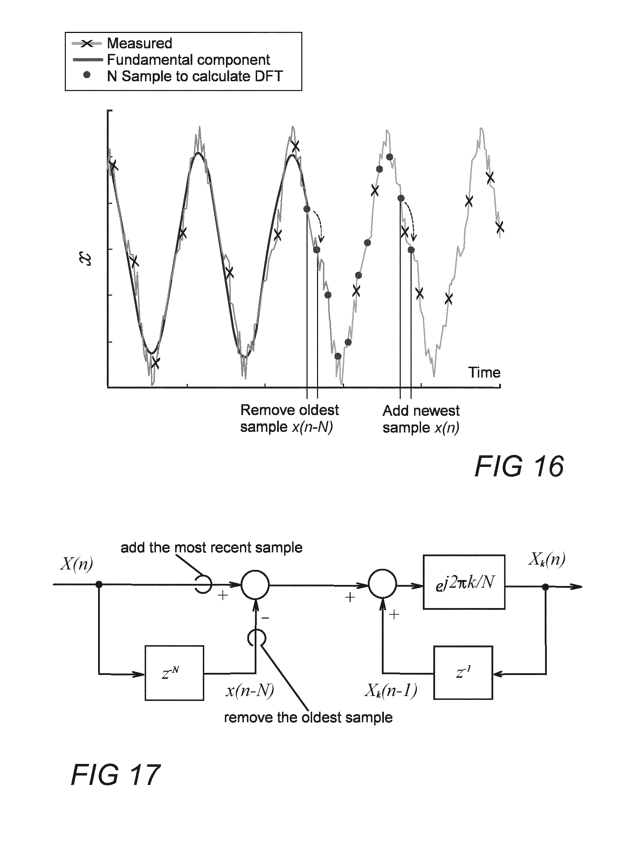

FIG. 16 is a graph illustrating examples of an embodiment of data samples used to calculate the fundamental voltage as can be obtained. One signal period of N samples is needed to calculate the fundamental component as illustrated in FIG. 16. When a new measurement sample is available, the equation above could be reconsidered to update the fundamental component. However, at each new time instance n, only the last sample x(n) is added and the oldest sample x(n-N) is removed from the window. This property is exploited in the Sliding Discrete Fourier Transform (SDFT) for computational efficiency. When the Fourier component $X_K(n-1)$ at time instance n-1 is known, the Fourier component $X_K(n)$ at time instance n can be written as:

$$X_K(n) = X_K(n-1) * e^{j*2\pi*\left(\frac{K}{N}\right)} - \text{x(n} - \text{N)} + \text{x(n)} \quad \text{(with K=1)}$$

One can read the equation above as the angular shift of the previous Fourier component $X_K(n-1)e^{j*2\pi*\left(\frac{K}{N}\right)}$ minus the oldest sample x(n-N) plus the most recent sample x(n). This SDFT approach is particularly interesting when only one K Fourier component needs to be known. This is the case here as only the fundamental components are considered, i.e. K=1.

FIG. 17 schematically illustrates an example of an embodiment of a portion of a control function for a device including an example of an embodiment of a portion of a sliding discrete Fourier transform.

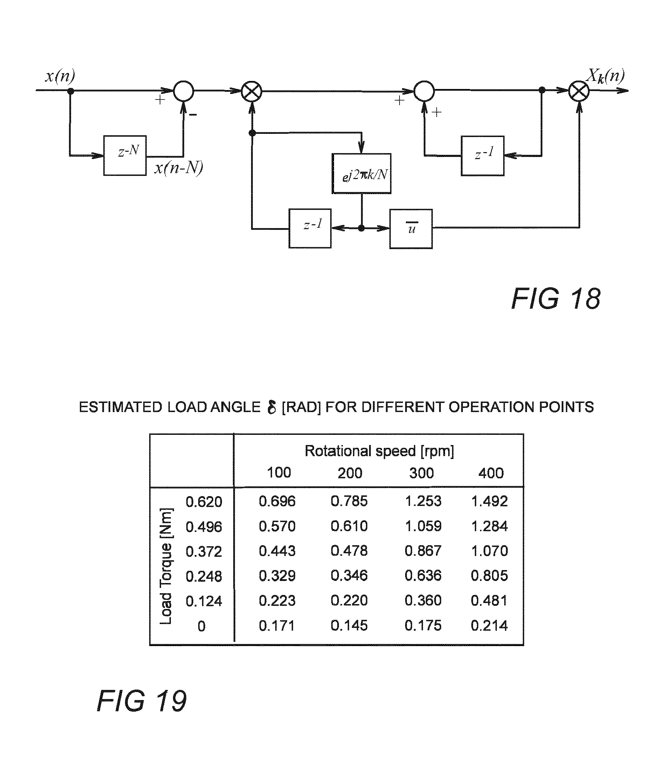

FIG. 18 schematically illustrates an example of an embodiment of a portion of a modulated sliding discrete Fourier transform implementation. As illustrated in the equation above and FIG. 17 and FIG. 18, regardless of the window length N, the SDFT only needs two real adds and one complex multiply to compute a successive DFT output. This means a very low computational cost necessary for the acceptance and implementation in stepping motor drivers. An example of a portion of a preferred embodiment of a modulated SDFT algorithm is illustrated in FIG. 18.

An embodiment of the method may comprise estimating the angle between the back-emf voltage vector $E_S$ and the stator current vector. Using Lenz's law the back EMF voltage vector $E_S$, induced by the rotor flux, can be written as:

$$E_S = C * (d\Psi_R/dt)$$

This implies a phase lead of approximately 90° between the back EMF vector $E_S$ and the flux vector $\Psi_R$ as illustrated in FIG. 15.

FIG. 15 graphically illustrates an example of an embodiment of a portion of a vector representation of the back EMF for a motor in accordance with an embodiment of the present invention. From the example in FIG. 15, one can understand that in an embodiment the angle between the current vector $i_s$ and the back EMF vector $E_S$ may be $\frac{\pi}{2} - \delta$.

If this angle is denoted as $\frac{\pi}{2} - \delta = \alpha$, the stator current vector leads to the flux vector with an angle equal to $\delta$.

This angle is the load angle. Consequently, since the position of the flux vector of the rotor is known, the position of the rotor also is known.

As according to various embodiments, the current can be measured, estimating the load angle can be reduced to a problem where the back EMF signal has to be estimated. This estimation problem only depends on electrical parameters, as the phase currents and voltages can easily be measured and the stator phases can be modelled as:

$$U_S = R * i_S + L * \frac{di_S}{dt} + \mathrm{E}_S$$

Solving this equation in a straight forward way is not an option because determining the derivative of noisy signals would result in distorted results. Applying noise filters increases the estimation delay and is therefore not the best solution. When the vector representation of these signals is considered and only the first harmonic (fundamental component) is taken into account, the equation above can be rewritten as:

$$E_S e^{j\omega t} = U_S e^{j\omega t} - j * \omega * L * I_S e^{j\omega t} - RI_S e^{j\omega t}$$

Or in terms of phasors

$$E_S = U_S - j * \omega * L * I_S - RI_S$$

where $E_S$ represents the fundamental vector of the back-emf, $U_S$ represents the fundamental vector of the voltage over the stator coil, $I_S$ represents the fundamental vector of the current through the stator coil, L represents the inductance of the stator coils and $R_S$ represents the resistance in the stator coil. Whereby ω corresponds to 2nf with f being the frequency of these electrical signals resulting from the known rotational speed of the electrical machine. In stepper motors this rotational speed is substantially controlled by the control loop that is placed around the electrical machine, or it can be derived from known speed observation and determination techniques.

The fundamental back-EMF vector can hence be calculated from the fundamental current and voltage vectors using this formula.

The load angle can then be determined as:

$$E_S = U_S - j * \omega * L * I_S - RI_S$$

The algorithm can, for example for stepper motors, be applicable with the typical full-, half- and micro-stepping drive algorithms which can be implemented in the motor controller. It is an advantage of the method that there is no need for signal injection to determine the load angle.

It is an advantage of various embodiments that the dynamical behaviour is short compared to typical observer sensor-less algorithms. The required measurement time, before reliable estimation of the load angle is possible, is small compared with other observer based algorithms.

Implementations of the current method typically may use the speed setpoint (the time derivative of the angular position of the current vector). Since most stepper motors are driven with a known speed this requirement poses no disadvantage in practical use.

In a further aspect, various embodiments may relate to a computer program comprising computer program code means adapted to perform steps of a method for gathering information regarding a load angle as described above when the computer program is run on a computer, such as for example a circuit that includes a processor.

The computer program may be embodied on a computer readable medium.

The term "data carrier" is equal to the terms "carrier medium" or "computer readable medium", and refers to any medium that participates in providing instructions to a processor for execution. Such a medium may take many forms, including but not limited to, non-volatile media, volatile media, and transmission media. Non-volatile media include, for example, optical or magnetic disks, such as a storage device which is part of mass storage. Volatile media include dynamic memory such as RAM. Common forms of computer readable media include, for example, a floppy disk, a flexible disk, a hard disk, magnetic tape, or any other magnetic medium, a CD-ROM, any other optical medium, punch cards, paper tapes, any other physical medium with patterns of holes, a RAM, a PROM, an EPROM, a FLASH-EPROM, any other memory chip or cartridge, a carrier wave as described hereafter, or any other medium from which a computer can read. Various forms of computer readable media may be involved in carrying one or more sequences of one or more instructions to a processor for execution. The instructions can also be transmitted via a carrier wave in a network, such as a LAN, a WAN or the internet. Transmission media can take the form of acoustic or light waves, such as those generated during radio wave and infrared data communications. Transmission media include coaxial cables, copper wire and fiber optics, including the wires that form a bus within a computer.

Various embodiments thus also relate to data carriers storing a computer program product as described above and to the transmission of a computer program product.

By way of illustration, various embodiments not being limited thereby, measurement results of the determined load angle are discussed. The measurement results prove the usefulness of the approach. Load angle dynamics are compared to the determined dynamics.

In a first example, measurements are done to validate the algorithm. First, the load angle is interesting because its value reflects the capability of the rotor to follow the imposed speed. Therefore it is noted that the determined load angle decreases when the load torque decreases and increases when the friction torque increases such as for example due to a higher speed.

FIG. 19 is a table illustrating examples of embodiments of different estimated load angles ($\delta$) for different operating points. The average estimated load angles for different speed setpoints and load torque's depicted in FIG. 19 may be one embodiment that satisfies this constraint.

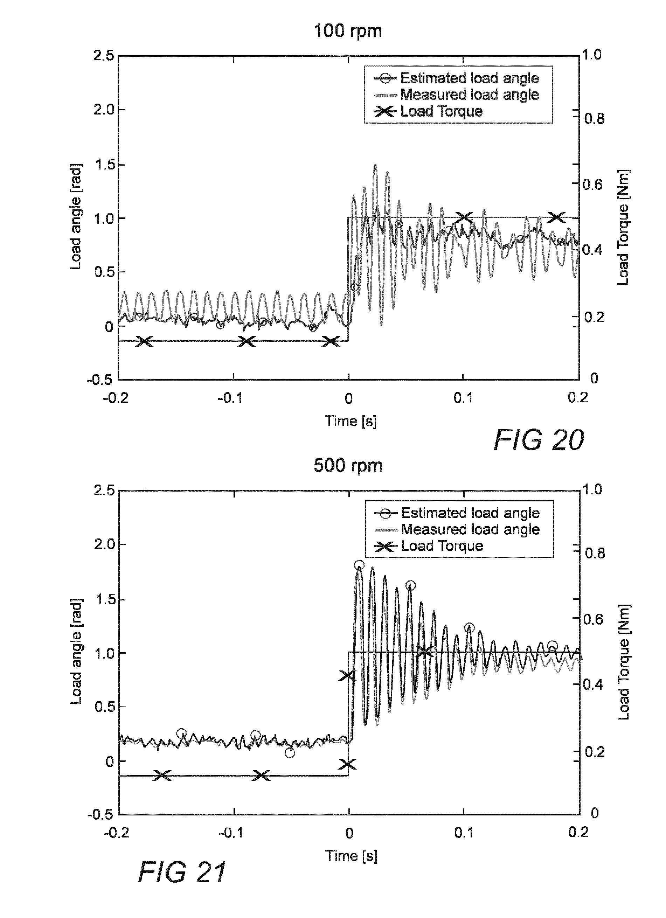

FIG. 20 is a graph illustrating examples of an embodiment of a comparison between the load angle estimation and measurements at a torque disturbance for a low speed operation, such as for example where n=100 rpm 20% $n_{max}$.

FIG. 21 is a graph illustrating examples of an embodiment of a comparison between the load angle estimation and measurements at a torque disturbance for another low speed operation, such as for example where n=500 rpm 100% $n_{max}$.

FIGs. 20-21 illustrate the capability of the SDFT algorithm to determine the dynamic behaviour of the load angle. To drive the stepping motor (such as for example, a motor with 50 pole pairs) at 100rpm, the drive current and voltage signals can have a period of approximately 0.012s. This can be illustrated as:

$$T_{signal} = \frac{60}{n * p}$$

where, n is the rotational speed of the stepper motor (in rpm), and p equals the number of pole pairs.

When the speed is increased to 500rpm, the signal period may become approximately 0.0024s. According to the Sliding Discrete Fourier Transform, the load angle estimation will be updated with every new measurement sample. However, the estimation is based on all the samples within the sliding window. As this sliding window will have the same length as the signal period, the load angle estimation will respond quicker at higher speeds. A correct estimation of the load angle dynamics may be also more crucial at higher speeds as these speeds setpoints are closer to the operating limits of the machine. At higher/more critical speeds, the dynamic behaviour can be determined more exactly such as for example as illustrated in FIG. 21.

The Sliding Discrete Fourier Transform needs one full signal period to determine the fundamental Fourier components. When a new speed setpoint is applied, the window size has to be adapted and the algorithm may only correctly determine the load angle after a full signal period. During the first signal period after the speeds setpoint step, the SDFT approach may not deliver valuable information. When the speed setpoint in rotations per minute is written as n the signal period becomes:

$$T_{signal} = \frac{60}{n * p}$$

where p is the number of pole-pairs. The load angle transient behaviour after a speed setpoint change is discussed before and illustrated in FIG. 8 and in FIG. 9. It is interesting to compare this load angle behaviour with the estimator dynamics to determine whether the algorithm is fast enough to estimate the transient load angle behaviour. The load angle behaviour after a speed setpoint step is speed independent. However, at higher speed setpoints the signal period will decrease and the SDFT algorithm delivers the estimations faster.

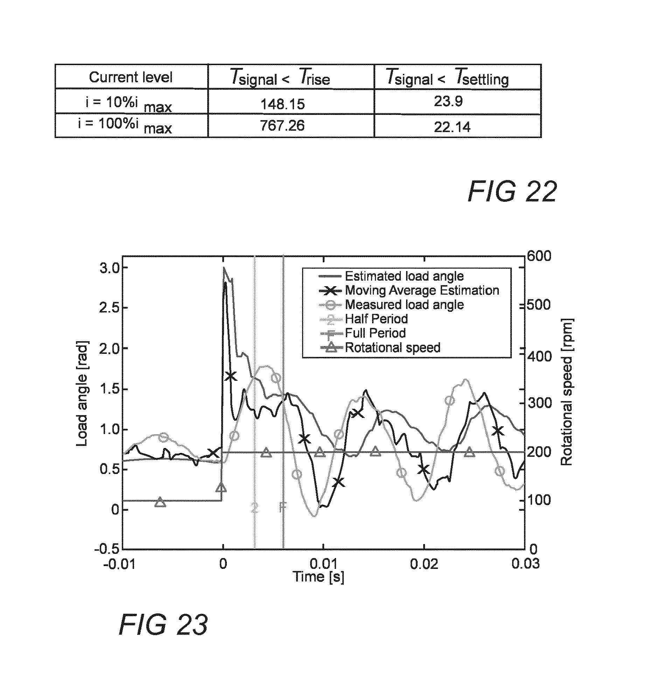

FIG. 22 is a table illustrating examples of embodiments of s minimum rotational speed (RPM) to estimate the load angle after a speed setpoint change before the rise $T_{rise}$ or $T_{settling}$ is elapsed. FIG. 22 shows the minimum rotational speed to estimate the load angle after a speed setpoint change before the rise $T_{rise}$ or $T_{settling}$, is elapsed. At full nominal current the speed n has to be higher than the maximum speed of 500rpm to determine the load angle accurately before its peak value is reached such as at $T_{rise}$. Therefore, the signal vector representation based on actual values can be used to determine the load angle after a speed setpoint change before the signal period is elapsed.

FIG. 23 is a graph illustrating examples of an embodiment of the load angle estimation at a speed disturbance elapsed. Both the SDFT and moving average approach overestimates the load angle after a speed setpoint change. This is not a problem as a control algorithm increases the current when the load angle is too high. This will result in a robust response to a speed setpoint change.

In a last example, the use of the load angle estimation algorithm for stall detection is evaluated. Stall detection is an issue in many stepping motor driven systems. When a stepping motor is driven at a load torque and speed setpoint beyond its pull-out range, the rotor loses synchronization.

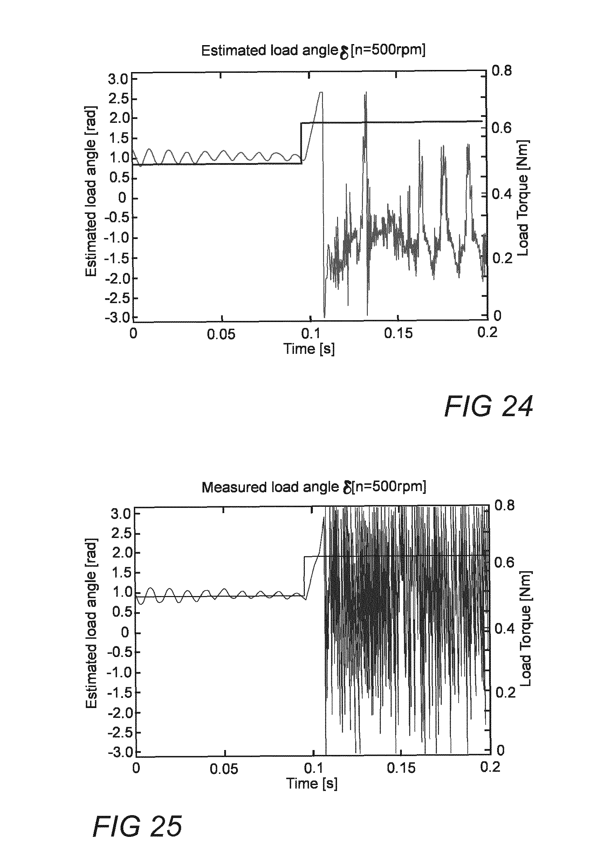

FIG. 24 is a graph illustrating examples of an embodiment of the estimated load angle when an example of a stall occurs.

FIG. 25 is a graph illustrating examples of another embodiment of the estimated load angle when another example of a stall occurs. As illustrated in FIG. 24 and in FIG. 25, when a stall occurs, the measured and estimated load angle will increase above the maximum value and then vary continuously approximately between -n rad and n rad.

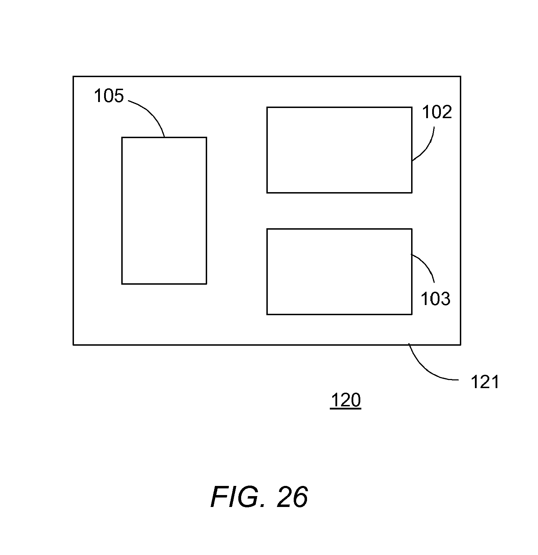

FIG. 26 illustrates an enlarged plan view of a portion of an embodiment of a semiconductor device or integrated circuit 120 that is formed on a semiconductor die 121. Circuits of system 100 are formed on die 121. For example, one or more or all of circuits 102, 103, 105, and/or 107 are formed on die 121. Die 121 may also include other circuits that are not shown in FIG. 26 for simplicity of the drawing. For example, machine 104 may be a micro-circuit (often referred to as a MEMS machine) that is formed on die 121. Circuits 102, 103, 105, and/or 107 and device or integrated circuit 120 are formed on die 121 by semiconductor manufacturing techniques that are well known to those skilled in the art.

From all the descriptions herein, one skilled in the art can determine that according to various embodiments, a system and/or a circuit (such as circuit 100 for example) for gathering information about the load angle of a synchronous electrical machine may comprise: a data obtainment circuit (such as for example circuit 103) for obtaining voltage and current information of the voltage over and current in the stator coils of the machine (such as machine 104 for example), and a processing unit or processor circuit (for example circuit 102) for;

determining, based on the obtained voltage and current information from the data obtainment means, the stator current vector and the stator voltage vector,

obtaining, the fundamental frequency of the obtained voltage and current information,

determining the amplitude and phase of the fundamental vector of the obtained stator voltage vector and stator current vector, and

deriving, based on the voltage and current fundamental vector, a fundamental vector of the back-EMF.

An embodiment of the system may include that the processing circuit is adapted for determining information about the load angle based on the phase difference between the back EMF fundamental vector and the fundamental of the current fundamental vector.

In an embodiment, the system may include that the processing circuit is adapted for deriving the fundamental vector of the back-EMF based on the relation:

$$E_S = U_S - j * \omega * L * I_S - RI_S$$

where $E_S$ represents the fundamental vector of the back-emf, $U_S$ represents the fundamental vector of the voltage over the stator coil, $I_S$ represents the fundamental vector of the current through the stator coil, L represents the inductance of the stator coils and R represents the resistance of the stator coil and whereby $\omega$ corresponds to 2nf..

An embodiment may include that the data obtainment circuit may be adapted for obtaining samples of the voltage and current information at a sampling frequency $f_s$.

Another embodiment may include that the data obtainment circuit may be adapted for obtaining N samples for the voltage and current information and wherein the processing unit (102) is adapted for deriving from the N samples the amplitude and phase of a the fundamental vector of the voltage and current using:

$$X_K = \sum_{n=0}^{N-1} x(n) * e^{-j*K*\left(\frac{2\pi}{N}\right)*n} \quad (\text{K}=1)$$

With N the ratio between the sampling frequency and the fundamental frequency.

In an embodiment, the processing circuit may be adapted for calculating the Fourier coefficient for the voltage and current fundamental vector using a Sliding Discrete Fourier Transform.

An embodiment may include that the processing circuit may be adapted for calculating the Fourier coefficient for the voltage and current fundamental vector using a Modulated Sliding Discrete Fourier Transform.

The synchronous electrical machine may be a stepper motor in an embodiment.

An embodiment may include an electrical machine comprising a controller circuit for controlling the driving of the electrical machine.

An embodiment may include that the processing circuit may comprise a sampling circuit for sampling the voltage in the coils of the machine and a data input connection with the controller of the electrical machine configured for directly obtaining samples of the current used for driving the electrical machine.

In an embodiment, the processing circuit may comprise a data input connection with the controller circuit and configured for directly obtaining the fundamental frequency (f) of the obtained voltage and current information.

One embodiment may include that the electrical machine may be coupled to the system for gathering information and wherein the controller circuit is configured for adapting the controlling of the driving as function of load angle information obtained from the system for gathering information.

An embodiment may include that the controller circuit and the system for gathering information form a closed loop control system for the synchronous electrical machine.

Those skilled in the art will appreciate that a method for forming a circuit of controlling a synchronous electrical machine may comprise:

configuring the circuit to obtain voltage and current information of the voltage and current in the coils of the machine,
configuring the circuit to determine, based on the obtained voltage and current information, an amplitude and phase of the fundamental of the voltage and current vector based upon the voltage and current info from the data obtainment means
configuring the circuit to derive, based on the fundamental of the voltage and current vector, a fundamental vector of the back-EMF, and
configuring the circuit to determine information about the load angle based on the phase of the back EMF fundamental vector and the fundamental of the current vector.

An embodiment may include configuring the circuit to receive a signal representative of a voltage over the coils and a signal representative of current in the coils.

An embodiment of the method may include configuring the circuit to obtain derive the fundamental vector of the back-EMF is based on the relation:

$$E_S(e^{j\omega}) = U_S(e^{j\omega}) - (1 - (e^{-j\omega}) * L * I_S(e^{j\omega}) - RI_S(e^{j\omega})$$

where $E_S$ represents the back-emf, $U_S$ represents the voltage, $I_S$ represents the current, L represents the inductance and R represents the resistance.

An embodiment may include configuring the circuit to obtain N samples for the voltage and current information and wherein deriving a fundamental of the voltage vector and the current vector comprises deriving from the N samples the amplitude and phase of a fundamental Fourier coefficient for the voltage and current vector using:

$$X_K = \sum_{n=0}^{N-1} x(n) * e^{-j*K*\left(\frac{2\pi}{N}\right)*n} \quad (\text{K}=1)$$

In an embodiment, the method may include configuring the circuit to determine the fundamental for the voltage and current vector using a Sliding Discrete Fourier Transform.

An embodiment may include configuring the circuit to determine the fundamental for the voltage and current vector using a Sliding Discrete Fourier Transform comprises determining the fundamental for the voltage and current vector using a Modulated Sliding Discrete Fourier Transform.

In an embodiment, the method may include configuring the circuit to output information regarding a load angle of a synchronous electrical machine and using the information regarding the load angle for controlling the driving of the electrical machine.

In an embodiment, the method may include configuring the circuit to change one or more of an algorithm selection, a number of samples to be taken, a sample frequency, a timing of the current injection in the system.

An embodiment of the method may include configuring the circuit for implementing the method as computer program for controlling a system for gathering information of a load angle in a synchronous electrical machine when the computer program is executed.

An embodiment may include configuring a computing device and/or a program product for, when executed on the computing device, performing the method.

Those skilled in the art will appreciate that an embodiment of a method of forming a circuit, such as for example circuit 107, to control an electrical machine may comprise: configuring the circuit to obtain voltage and current information of the voltage over and current in one or more stator coils, such as for example as explained for circuit 103;
configuring the circuit to determine, based on the voltage and current information, a stator current vector and a stator voltage vector, such as for example as explained for circuit 102;
configuring the circuit to determine a first frequency of the voltage and current information;
configuring the circuit to determine the amplitude and phase of a fundamental vector of the stator voltage vector and stator current vector; and
configuring the circuit to determine, based on the fundamental vector of the stator voltage vector and stator current vector, a fundamental vector of a back-EMF.

Another embodiment may include configuring the circuit to control the electrical machine based on the fundamental vector of the back-EMF.

While the subject matter of the descriptions are described with specific preferred embodiments and example embodiments, the foregoing drawings and descriptions thereof depict only typical and examples of embodiments of the subject matter and are not therefore to be considered to be limiting of its scope, it is evident that many alternatives and variations will be apparent to those skilled in the art. As will be appreciated by those skilled in the art, the example form of system 100 and circuit 107 are used as a vehicle to explain the circuit configuration and the method of determining the load angle, such as for example at discrete points in the rotation of the rotor. The example embodiment(s) illustrated in the drawings and described in the descriptions may be configured with various other embodiments in addition to the described embodiments.

As the claims hereinafter reflect, inventive aspects may lie in less than all features of a single foregoing disclosed embodiment. Thus, the hereinafter expressed claims are hereby expressly incorporated into this description, with each claim standing on its own as a separate embodiment of an invention. Furthermore, while some embodiments described herein include some but not other features included in other embodiments, combinations of features of different embodiments are meant to be within the scope of the invention, and form different embodiments, as would be understood by those skilled in the art.

**Claims**

1. A system for gathering information about the load angle of a synchronous electrical machine, the system comprising

   - a data obtainment means for obtaining voltage and current information of the voltage over and current in the stator coils of the machine,
   - a processing unit for
   - determining, based on the obtained voltage and current information from the data obtainment means, the stator current vector and the stator voltage vector,
   - obtaining, the fundamental frequency ($f$) of the obtained voltage and current information,
   - determining the amplitude and phase of the fundamental vector of the obtained stator voltage vector and stator current vector
   - deriving, based on the voltage and current fundamental vector, a fundamental vector of the back-EMF.

2. A system according to claim 1 where the processing unit is adapted for determining information about the load angle based on the phase difference between the back EMF fundamental vector and the fundamental of the current fundamental vector.

3. A system according to any of the previous claims, wherein the processing unit (102) is adapted for deriving the fundamental vector of the back-EMF based on the relation

$$ E_s = U_s - j.\omega.L.I_s - R.I_s $$

where $E_S$ represents the fundamental vector of the back-emf, $U_S$ represents the fundamental vector of the voltage over the stator coil, $I_S$ represents the fundamental vector of the current through the stator coil, $L$ represents the inductance of the stator coils and $R$ represents the resistance of the stator coil and whereby $\omega$ corresponds to $2\pi f$..

4. A system according to claim 1, wherein the data obtainment means is adapted for obtaining $N$ samples for the voltage and current information and wherein the processing unit is adapted for deriving from the $N$ samples the amplitude and phase of a the fundamental vector of the voltage and current using

$$ X_k = \sum_{n=0}^{N-1} x(n).e^{-j.k.\frac{2\pi}{N}.n} \quad (k = 1) $$

With N the ratio between the sampling frequency and the fundamental frequency.

5. A system according to claim 4, wherein the processing unit is adapted for calculating the Fourier coefficient for the voltage and current fundamental vector using a Sliding Discrete Fourier Transform.

6. A system according to claim 4 wherein the processing unit is adapted for calculating the Fourier coefficient for the voltage and current fundamental vector using a Modulated Sliding Discrete Fourier Transform.

7. An electrical machine comprising the system according to any of the previous claims, the electrical machine furthermore comprising a controller for controlling the driving of the electrical machine.

8. An electrical machine according to claim 7, wherein the data obtainment means comprises a sampling means for sampling the voltage in the coils of the machine and a data input connection with the controller of the electrical machine configured for directly obtaining samples of the current used for driving the electrical machine.

9. An electrical machine according to any of claims 8, wherein said electrical machine is connected to the system for gathering information and wherein the controller is configured for adapting the controlling of the driving as function of load angle information obtained from the system for gathering information.

10. A method for obtaining information regarding a load angle of a synchronous electrical machine, the method comprising

- obtaining voltage and current information of the voltage and current in the coils of the machine,
- determining, based on the obtained voltage and current information, an amplitude and phase of the fundamental of the voltage and current vector based upon the voltage and current info from the data obtainment means
- deriving, based on the fundamental of the voltage and current vector, a fundamental vector of the back-EMF, and
- determining information about the load angle based on the phase of the back EMF fundamental vector and the fundamental of the current vector.

11. A method according to claim 10, wherein deriving the fundamental vector of the back-EMF is based on the relation

$$E_s\left(e^{j\omega}\right) = U_s\left(e^{j\omega}\right) - \left(1 - e^{-j\omega}\right).L.I_s\left(e^{j\omega}\right) - R.I_s\left(e^{j\omega}\right)$$

with $E_S$ represents the back-emf, $U_S$ represents the voltage, $I_S$ represents the current, L represents the inductance and R represents the resistance.

12. A method according to any of claims 10 or 11, wherein obtaining voltage and current information comprises obtaining N samples for the voltage and current information and wherein deriving a fundamental of the voltage and the current vector comprises deriving from the N samples the amplitude and phase of a fundamental Fourier coefficient for the voltage and current vector using

$$X_k = \sum_{n=0}^{N-1} x(n).e^{j.k.\frac{2\pi}{N}.n}(k=1)$$

13. A method according to any of claims 10-12, the method furthermore comprising outputting information regarding a load angle of a synchronous electrical machine and using the information regarding the load angle for controlling the driving of the electrical machine.

14. A system comprising:

a data obtainment unit configured to obtain voltage and current information of the voltage over and current in one or more stator coils; and
a processing unit coupled to the data obtainment unit and configured to:

determine, based on the voltage and current information, a stator current vector and a stator voltage vector;
determine a first frequency of the voltage and current information;
determine the amplitude and phase of a fundamental vector of the stator voltage vector and stator current vector; and
determine, based on the fundamental vector of the stator voltage vector and stator current vector, a fundamental vector of a back-EMF.

15. A method comprising
obtaining voltage and current information of the voltage over and current in one or more stator coils;
determining, based on the voltage and current information, a stator current vector and a stator voltage vector;
determining a first frequency of the voltage and current information;
determining the amplitude and phase of a fundamental vector of the stator voltage vector and stator current vector; and
determining, based on the fundamental vector of the stator voltage vector and stator current vector, a fundamental vector of a back-EMF.

100

102

Processing
Circuit

105

Controller
Circuit

Data
Obtainment
Circuit

103

Electrical
Machine

104

FIG. 1

Full Step Principle

## FIG. 2a

Hybrid Stepping Motor Construction

## FIG. 2b

FIG 3

FIG 4

FIG 5

FIG 6

FIG 7

FIG 8

FIG 9

FIG 10

FIG 11

FIG 12

FIG 13

FIG 14

FIG. 15

Remove oldest
sample x(n-N)

Add newest
sample x(n)

*FIG 16*

*FIG 17*

## FIG 18

ESTIMATED LOAD ANGLE $\delta$ [RAD] FOR DIFFERENT OPERATION POINTS

| | | Rotational speed [rpm] | | | |
|---|---|---|---|---|---|
| | | 100 | 200 | 300 | 400 |
| Load Torque [Nm] | 0.620 | 0.696 | 0.785 | 1.253 | 1.492 |
| | 0.496 | 0.570 | 0.610 | 1.059 | 1.284 |
| | 0.372 | 0.443 | 0.478 | 0.867 | 1.070 |
| | 0.248 | 0.329 | 0.346 | 0.636 | 0.805 |
| | 0.124 | 0.223 | 0.220 | 0.360 | 0.481 |
| | 0 | 0.171 | 0.145 | 0.175 | 0.214 |

## FIG 19

## 100 rpm

*FIG 20*

## 500 rpm

*FIG 21*

| Current level | $T_{signal} < T_{rise}$ | $T_{signal} < T_{settling}$ |
|---|---|---|
| $i = 10\%i_{max}$ | 148.15 | 23.9 |
| $i = 100\%i_{max}$ | 767.26 | 22.14 |

*FIG 22*

*FIG 23*

FIG 24

FIG 25

FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61778255 B